# EUROPEAN PATENT SPECIFICATION

(11) **EP 3 207 645 B1**
(45) Date of publication and mention of the grant of the patent: **11.12.2019**
(21) Application number: 15786878.7
(22) Date of filing: 12.10.2015
(51) Int. Cl.: H04H 60/12, H04H 20/22, H04N 21/43, H04N 21/44, H04N 21/4425, H04N 21/462, H04N 21/61

(54) **REPLACING A CORRUPTED VIDEO FRAME**
ERSETZEN EINES KORRUPTEN VIDEORAHMENS
REMPLACEMENT D'UNE IMAGE VIDÉO ALTÉRÉE

(30) Priority: 13.10.2014 US 201414512684
(43) Date of publication of application: 23.08.2017
(73) Proprietor: Vigor Systems Inc., La Jolla, CA 92037 (US)
(72) Inventor: SÖRLANDER, Magnus, La Jolla, California 92037 (US); OSSAAR, Janno, EE-13816 Tallin (EE)
(74) Representative: Kransell & Wennborg KB
(86) International application number: PCT/EP2015/073547
(87) International publication number: WO 2016/058982

(56) References cited:
- EP-A2- 1 748 655
- DE-A1-102012 221 791
- US-A- 6 138 012
- US-A1- 2005 128 362
- US-A1- 2007 101 378

## Description

### TECHNICAL FIELD

It is presented a video stream provider, method, computer program and computer program product for replacing a corrupted video frame.

### BACKGROUND

A primary satellite re-transmits, using accepted protocols, digital TV signals uplinked from a ground station to a defined terrestrial geographical area, commonly referred to as 'satellite footprint'.

A secondary satellite with a similar uplink re-transmits the same digital TV signals to a footprint that overlaps that of the primary satellite. One or more ground stations downlink the digital TV signals from the primary and secondary satellites.

Satellite radio signals are weak and prone to disruption by interference. Sources of interference include solar and earth weather conditions, ground radio interference and physical objects. Both uplink and downlink can be affected and failure can also be equipment related.

During times of reception difficulty by the downlink stations, human operators have the option of selecting the satellite downlink that provides the most reliable reception. Because selection is typically a manual process, short term disruption is often ignored and only when longer term failure appears imminent, is the decision made to change downlink stations, i.e. switch from primary satellite reception to secondary satellite reception and vice versa.

The period at switch-over can be several seconds as receivers need to re-lock to transmitted signals and this causes loss of data. The communication path is unidirectional and hence there is no immediate feedback to the originating uplink station. Equipment may monitor the reliability of communication paths and the switch can be automated, but the switch-over is arbitrary and does not protect data loss.

US 2007/0101378 discloses a compression system compressing a programme into a first and second sequence of corresponding blocks. A transmission system transmits blocks of the second sequence according to a predetermined real-time delivery schedule. The transmission system transmits the blocks of the first sequence earlier than corresponding blocks of the second sequence. A receiver receives blocks of the second sequence and the first sequence. A buffer temporarily stores blocks of the first sequence that correspond to blocks of the second sequence for which the delivery schedule has not yet expired. A controller directs to the output for each time interval of the delivery schedule a representation of a block of the second sequence if such a block was received successfully for the time interval or, otherwise, a representation of a corresponding block stored in the buffer.

US 2005/128362 A1 discloses a multipath video reception system.

DE 10 2012 221791 A1 discloses a method for reproducing information sequence for TV, involving selecting decode sequence from corresponding original information sequence, and forming output sequence from successive decoder selected sequences.

US 6 138 012 A discloses a method and apparatus for reducing signal blocking in a satellite communication system.

EP 1748 655 A2 discloses a technique for addressing frame loss in a video stream.

### SUMMARY

It is an object to reduce data loss in a satellite radio transmission system.

The technical features of the invention and those of the particular embodiments claimed are defined by the appended claim set. Related illustrative technical aspects and examples are summarized as follows.

According to a first aspect, it is provided a video stream provider for providing an output video stream. The video stream provider comprises: a processor; and a memory storing instructions that, when executed by the processor, causes the video stream provider to: receive a first video stream comprising a plurality of video frames, the first video stream being a main video stream; receive a second video stream comprising a plurality of video frames, wherein the video frames of the second video stream correspond to the video frames of the first video stream, the second video stream being a complementary video stream; determine a corrupted video frame of the main video stream; replace the corrupted video frame with a corresponding video frame from the complementary video stream to generate an output video stream; and output the output video stream.

The instructions to determine a corrupt video frame may comprise instructions that, when executed by the processor, causes the video stream provider to determine that the corrupted video frame is missing a program reference clock stamp or a presentation time stamp, determining an out of sequence continuity counter, determining a cyclic redundancy check error, or obtaining a transport error indicator.

The video stream provider may further comprise instructions that, when executed by the processor, causes the video stream provider to: decode the main video stream and the complementary video stream. In such a case, the corrupted video frame is in the decoded main video stream and the corresponding video frame is in the decoded complementary video stream. The corrupted video frame may be in the main video stream, and both the main video stream and the complementary video stream may comprise compressed video frames.

The instructions to replace the corrupted video frame may comprise instructions that, when executed by the processor, causes the video stream provider to replace data packets for the corrupted video frame with data packets of the corresponding video frame.

The video frames of the main video stream and the video frames of the complementary video stream may both include time stamp information. In such a case, the instructions to replace the corrupted video frame comprise instructions that, when executed by the processor, causes the video stream provider to replace based on the time stamp information.

The video stream provider may further comprise instructions that, when executed by the processor, causes the video stream provider to extract the time stamp information from ancillary data packets for the main video stream and the complementary video stream.

The video stream provider may be a satellite integrated receiver and decoder (IRD).

According to a second aspect, it is provided a method for providing an output video stream. The method is performed in a video stream provider and comprising the steps of: receiving a first video stream comprising a plurality of video frames, the first video stream being a main video stream; receiving a second video stream comprising a plurality of video frames, wherein the video frames of the second video stream correspond to the video frames of the first video stream, the second video stream being a complementary video stream; determining a corrupted video frame of the main video stream; replacing the corrupted video frame with a corresponding video frame from the complementary video stream to generate an output video stream; and outputting the output video stream.

The step of determining a corrupt video frame may comprise determining that the corrupted video frame is missing a program reference clock stamp or a presentation time stamp, determining an out of sequence continuity counter, determining a cyclic redundancy check error, or obtaining a transport error indicator.

The method may further comprise the step, prior to the step of determining the corrupted video frame, of: decoding the main video stream and the complementary video stream. In such a case, in the step of determining a corrupted video frame, the corrupted video frame is in the decoded main video stream and the corresponding video frame is in the decoded complementary video stream.

In the step of determining a corrupted video frame, the corrupted video frame may be in the main video stream. In such a case, both the main video stream and the complementary video stream comprise compressed video frames.

The step of replacing the corrupted video frame may comprise replacing data packets for of the corrupted video frame with data packets for the corresponding video frame.

The video frames of the main video stream and the video frames of the complementary video stream may both include time stamp information. In such a case, the step of replacing the corrupted video frame comprises replacing based on the time stamp information.

The method may further comprise the step of: extracting the time stamp information from ancillary data packets for the main video stream and the complementary video stream.

The main video stream may be synchronized with the complementary video stream using the time stamp information.

The main video stream may be synchronized with the complementary video stream.

The method may further comprise the steps of: determining a group of sequential corrupted video frames based on the corrupted video frame; and replacing the group of sequential corrupted video frames with a corresponding group of sequential video frames from the complementary video stream to form part of the output video stream.

The step of determining a group of sequential corrupted video frames may comprise determining a group of sequential corrupted video frames based on a percentage of the frame that is recoverable.

The method may further comprise the steps, prior to the step of replacing the corrupted video frame, of: counting a number of corrupted video frames of the main video stream; and when the number of corrupted video frames is greater than a threshold number in a given time period, making the first video stream the complementary video stream and making the second video stream the main video stream.

According to a third aspect, it is provided a computer program for providing an output video stream. The computer program comprises computer program code which, when run on a video stream provider causes the video stream provider to: receive a first video stream comprising a plurality of video frames, the first video stream being a main video stream; receive a second video stream comprising a plurality of video frames, wherein the video frames of the second video stream correspond to the video frames of the first video stream, the second video stream being a complementary video stream; determine a corrupted video frame of the main video stream; replace the corrupted video frame with a corresponding video frame from the complementary video stream to generate an output video stream; and output the output video stream.

According to a second aspect, it is provided a computer program product comprising a computer program according to the third aspect and a computer readable means on which the computer program is stored.

### BRIEF DESCRIPTION OF THE DRAWINGS

The invention is now described, by way of example, with reference to the accompanying drawings, in which:
Fig. 1 illustrates a related art MPEG (Moving Picture Expert Group) transport stream;
Fig. 2 illustrates a related art satellite TV broadcasting environment with the simplification of a single TV channel being transmitted;
Fig. 3 illustrates a related art satellite TV broadcasting environment in which two satellites are employed to provide a backup transmission path;
Fig. 4 illustrates an example of a configuration of a satellite TV broadcast system according to an exemplary embodiment;
Fig. 5 illustrates an example of a configuration of a satellite TV broadcast system according to an exemplary embodiment;
Fig. 6 illustrates video frame repair by damaged data packet replacement according to an exemplary embodiment;
Fig. 7 is a flowchart illustrating a method of damaged data packet replacement according to an exemplary embodiment;
Fig. 8 illustrates an example configuration in which two satellite transmission paths may be employed by using a dedicated video encoder according to another exemplary embodiment.;
Fig. 9 illustrates an uplink side of the satellite TV broadcast system of Fig. 8 in more detail;
Fig. 10 illustrates applying time stamp information in the uplink side of Fig. 9.;
Fig. 11 illustrates a video stream provider of the satellite TV broadcast system of Fig. 8;
Fig. 12 illustrates a compressed frame selector of Fig. 11 in more detail;
Fig. 13 is a flowchart illustrating an example of a method according to another exemplary embodiment;
Fig. 14 illustrates a video stream provider according to another exemplary embodiment;
Fig. 15 illustrates video decoders of the video stream provider of Fig. 14 in more detail;
Fig. 16 is a flowchart illustrating an example process of video data reconstruction according to an exemplary embodiment;
Fig. 17 is a block diagram of a computer system according to an exemplary embodiment.

### DETAILED DESCRIPTION

Exemplary embodiments and further illustrative examples will now be described with reference to the accompanying drawings. Additionally, the various exemplary embodiments as described may be implemented in the form of software running on a general purpose computer, in the form of a specialized hardware, or combination of software and hardware.

Unless defined otherwise, all technical and scientific terms used herein have the same meaning as commonly understood by one of ordinary skill in the art to which this disclosure belongs.

It is an object to provide for data error repair or concealment within video streams transmitted via satellite.

It is another object to provide for performance benefits when new error concealment software is deployed on a suitable hardware platform.

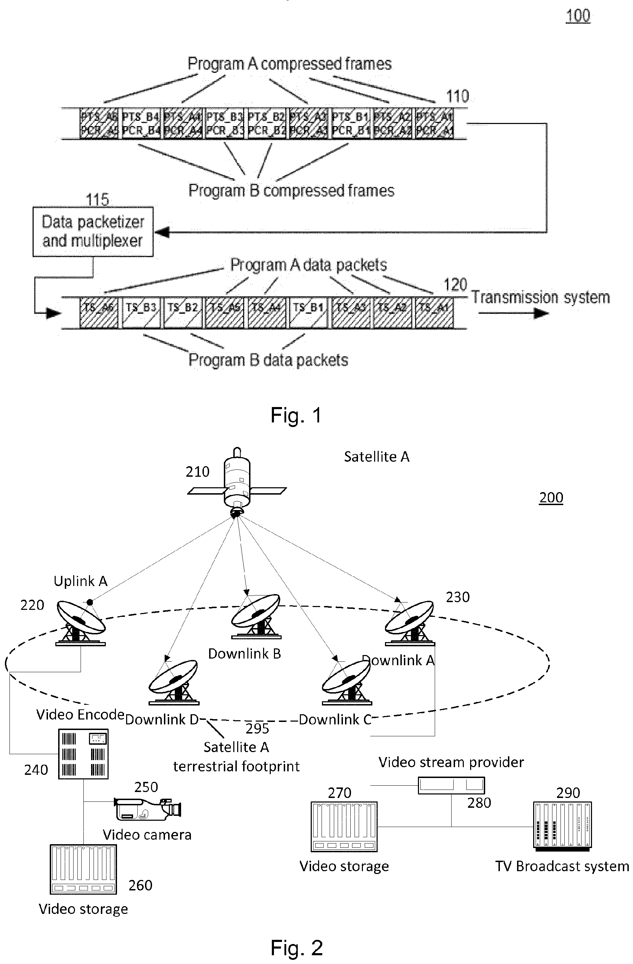

Fig. 1 illustrates a related art MPEG transport stream environment. As shown in Fig. 1, an MPEG transport stream environment 100 can contain multiplexed data packets from several programs. In this example two MPEG programs are contained in an MPEG transport stream 120. The MPEG transport stream 120 is typically used to transmit digital TV to set top boxes via cable, radio masts or satellite. Thus, the term "program" refers to generally to transmitted content, and may refer, for example, to a TV program.

Fig. 1 shows two programs, Program A and Program B, which may be packetized elementary streams (PES) with each compressed frame having an associated presentation time stamp (PTS) and program reference clock (PCR). Thus, there is a PTS/PCR sequence for Program A and one for Program B. A video stream 110 of the MPEG compressed frames including Program A and the Program B are input into a data packetizer and multiplexer 115 which generates the MPEG transport stream 120 of packetized digital data (transport stream packets) which are smaller data segments than the compressed frames. Program A and program B transport stream packets are multiplexed to spread the program bandwidth load evenly within the maximum allowable bandwidth of the transmission system.

Receiving equipment can assemble data packets for the transport stream to recreate the compressed frames of Program A and the compressed frames of Program B using established protocols. It will be understood that the following descriptions often make references to compressed frames for concision and ease of description. However, manipulation of data packets that comprise the compressed frames may occur using packet header information that associates packets with compressed frames, and data may remain as packets without fully assembling compressed frames of which the packets are a part.

Fig. 2 illustrates a satellite TV broadcasting environment with the simplification of a single TV channel being transmitted. As shown in Fig. 2, a satellite TV broadcasting environment 200 includes a Satellite A 210, an uplink satellite dish (Uplink A) 220 and a downlink satellite dish (Downlink A) 230, which together enable TV programs to be broadcast over large geographical areas. For example, the Satellite A 210, the uplink satellite dish 220 and the downlink A satellite dish 230 broadcast within a satellite footprint 295. The satellite TV broadcasting environment 200 is prone to uplink and downlink errors caused by, for example, terrestrial weather, solar activity and/or physical objects disrupting the transmission path. A video encoder 240 communicatively connected to the Uplink A 220 converts digital video data into a format that can be streamed, such as MPEG-2 or MPEG-4. However, it will be appreciated that MPEG-2 and MPEG-4 are only examples, and any current or future streaming format can be used, such as HEVC (High Efficiency Video Coding). The video encoder 240 may be supplied with live video from a video camera 250 or with stored pre-recorded material from a video storage 260. The Downlink A satellite dish 230 is communicatively coupled to a video stream provider 280. The video stream provider can e.g. be a satellite Integrated Receiver and Decoder (IRD). The video stream provider 280 may be communicatively coupled to a video storage 270 and a TV broadcast system 290, and may output a signal directly for broadcast to the TV broadcast system 290 and/or for recording in the video storage 270.

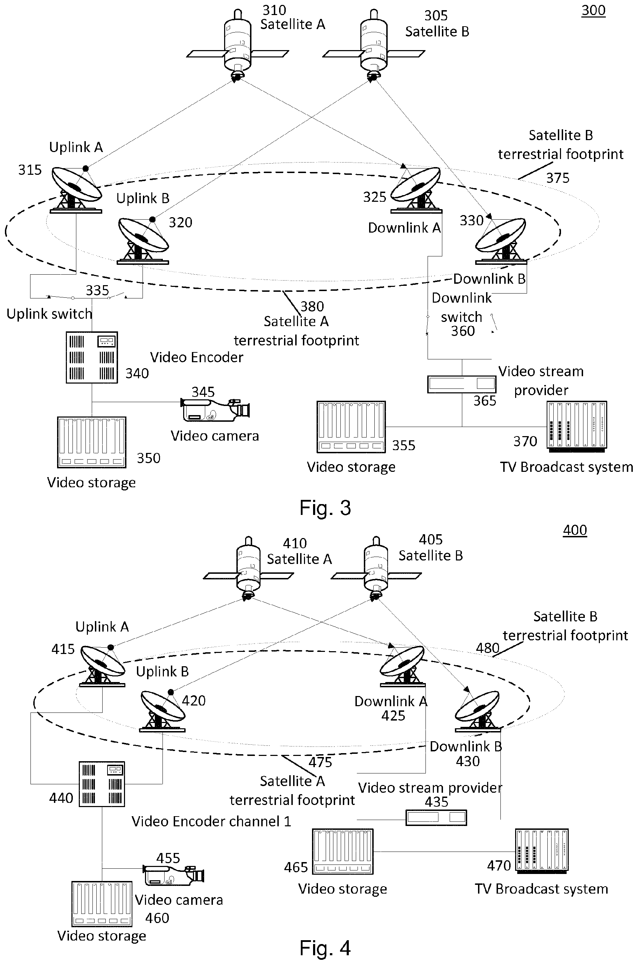

Fig. 3 illustrates a satellite TV broadcasting environment in which two satellites are employed to provide a backup transmission path. As shown in Fig. 3, a satellite TV broadcasting environment 300 includes a Satellite A 310 and a Satellite B 305. The Satellite A 310 receives a transmitted signal from an Uplink A 315 and transmits the received signal to a Downlink A 325. Satellite A 310, Uplink A 315, and Downlink A 325 have a geographical area indicated as Satellite A terrestrial footprint 380. Similarly, Satellite B 305 receives a transmitted signal from an Uplink B 320 and transmits the received signal to a Downlink B 330. Satellite B 305, Uplink B 320, and Downlink B 330 have a geographical area indicated as Satellite B terrestrial footprint 375.

In the satellite TV broadcasting environment 300, Uplink A 315 is communicatively coupled to Uplink B 320 through an Uplink switch 335, and Downlink A 325 is communicatively coupled to Downlink B 330 through a Downlink switch 360. In the satellite TV broadcasting environment 300, when the transmission path formed by uplink A 315, satellite A 310 and downlink A 325 fails, the transmission path B of uplink B 320, satellite B 305 and downlink B 330, can be employed using the uplink switch 335 and the downlink switch 360. The switch over is manually initiated and transmitted data is lost for several seconds. The uplink switch 335 and the downlink switch 360 themselves may be electronic but the process is manually initiated. The uplink side transmission requires that the Uplink A 315, for example, lock to the signal supplied by the video encoder 340 before valid data can be transmitted to the Satellite A 310. The Satellite A 310 must in turn, lock to the transmitted data the Satellite A 310 receives from the uplink A 315. Finally the Downlink A 325 must lock to the data contained in the transmission from the Satellite A 310. Thus when the transmission path is broken and re-established by human intervention, several seconds of data loss will occur before the video stream is again delivered to the video stream provider 365. In the case of live video, viewers will experience black or static screens during this period. If the transmission is of a TV program that will be stored for later broadcast, re-transmission of the program may be required incurring costs for satellite transponder bandwidth and possible disruption of broadcast schedules.

Fig. 4 illustrates an example of a configuration of a satellite TV broadcast system according to an exemplary embodiment. As shown in Fig. 4, a satellite TV broadcasting system 400 includes a Satellite A 410 and a Satellite B 405. The Satellite A 410 receives a transmitted signal from an Uplink A 415 and transmits the received signal to a Downlink A 425. Satellite A 410, Uplink A 415, and Downlink A 425 have a geographical area indicated as Satellite A terrestrial footprint 475. Similarly, Satellite B 405 receives a transmitted signal from an Uplink B 420 and transmits the received signal to a Downlink B 430. Satellite B 405, Uplink B 420, and Downlink B 430 have a geographical area indicated as Satellite B terrestrial footprint 480. The Satellite A terrestrial footprint 475 and the Satellite B terrestrial footprint 480 may partially or fully overlap. The Uplink A 415 and the Uplink B 420 are each communicatively coupled to a video encoder 440. The video encoder 440 may be communicatively coupled to a video camera 455 and a video storage 460. The Downlink A 425 and the Downlink B 430 are each communicatively coupled to a dual input video stream provider 435, and the dual input video stream provider 435 is communicatively coupled to a video storage 465 and a TV broadcast system 470.

The satellite TV broadcast system 400 of Fig. 4 illustrates data redundancy according to an exemplary embodiment. Satellite A 410 and Satellite B 405 are alternative transmission paths. The footprint of satellite A 475 and the footprint of satellite B 480 overlap, enabling the video stream provider 435 to receive transmissions from either satellite. The video stream provider 435 that has multiple video stream provider inputs used in conjunction with multiple downlink points, downlink A 425 and downlink B 430. This configuration creates the redundant capability for the satellite TV broadcast that is transmitted. Uplink A 415 and uplink B 420 have a common video encoder source 440 and the data supplied to each uplink is the same. The video stream provider 435 is a software and/or hardware platform. The video stream provider 435 continuously monitors satellite inputs from each of Downlink A 425 and Downlink B 430 for data packet errors and data loss. The video stream provider 435 assembles the satellite data packets into MPEG data packets, selecting only known good packets for assembly into a MPEG transport stream for TV broadcast through TV broadcast system 470, or for recording in video storage 465. Alternatively, the video stream provider 435 may assemble the satellite data packets into MPEG data packets by selecting packets that have the least errors.

Data packet errors may be determined by various current or future methods such as, out of sequence continuity counters (CC), cyclic redundancy check (CRC), transport error indicator (TEI) and/or evaluation of error detection data that may be appended to transport stream data packets, etc.

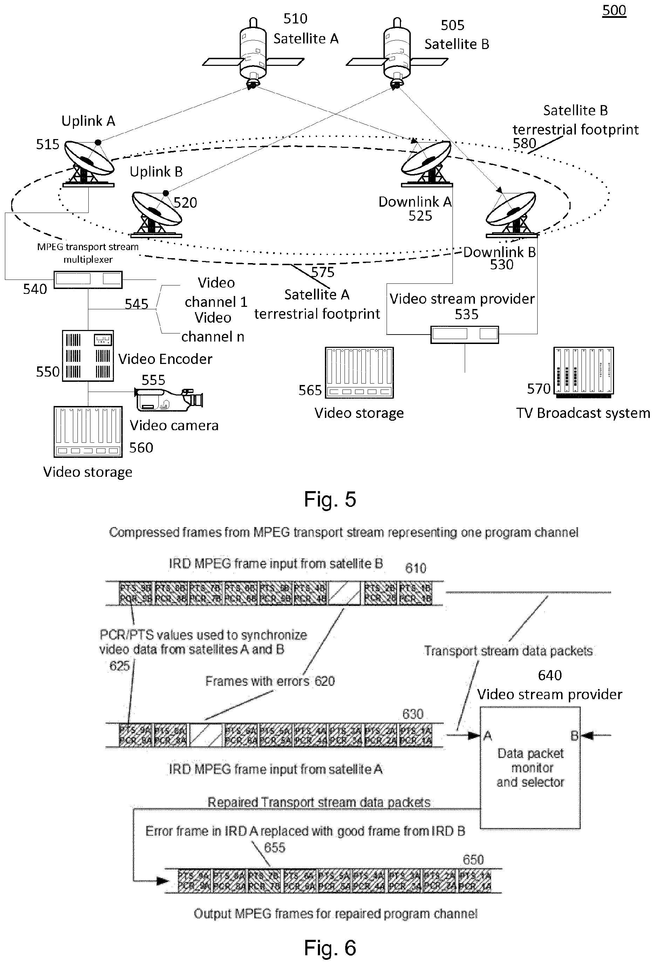

Fig. 5 illustrates an example of a configuration of a satellite TV broadcast system according to another exemplary embodiment. The configuration of Fig. 5 is the same as the configuration in Fig. 4, except for the video programs 545. The reference designators in FIG. 5 have been changed to 5xx in order for ease of description, and repeated description thereof has been omitted here for concision. In the satellite TV broadcast system 500 here, there are a plurality of video programs 545 provided as inputs to a multiplexer 540. The video programs 545 include, for example, programs on video channel 1 to video channel n. In this case, a plurality of video programs 545 are encapsulated within the MPEG transport stream generated by multiplexer 540 which is uplinked to Satellite A 510 and to Satellite B 505 using established broadcast protocols. Downlink A 525 and Downlink B 530 receive the same data and data redundancy is created for all video programs in the MPEG transport stream.

Fig. 6 illustrates damaged data packet replacement according to an exemplary embodiment. The video stream provider 640 may represent the video stream provider 435 of Fig. 4 or the video stream provider 435 of Fig 6. The video stream provider 640 may compare the data packets from satellite A and satellite B which are substantially similar and, in conjunction with data integrity tests, reject data packets with errors and replace them with known good data packets. Thus, a repaired output video stream 650 may be constructed for further transmission in a local broadcast system or for storage.

The video stream provider 640 may also assemble MPEG compressed video frames from smaller transport stream data packets and align the video frames of a first video stream 630 from satellite A with the video frames of a second video stream 610 from satellite B using timing information, such as PCR/PTS. The video data is the same for both transmission paths (and thus both video stream 610, 630) since the uplinked data has a common source. PTS frame position information is the same for satellite A and satellite B. This enables the video frame data of the two video streams 610, 630 to be synchronized 625. For example, a PTS_9A value in the first video stream 630 and a PTS_9B value in the second video stream 610 will be the same. For the purposes of clarity, MPEG data is illustrated for one program channel in a video stream, but as explained above, each video stream can contain multiple program channels. In this example, there is a first error frame 620a in the first transport stream 630 and a second error frame 620b in the second transport stream 610. The error frames 620a-b may be identified by detecting errors of one or more of the packets making up the frame. The packet errors are established data integrity test methods in the video stream provider 640 demodulators' hardware/firmware for the signals fed from the satellite downlinks. The data integrity tests may include, for example, cyclic redundancy check (CRC), continuity counter (CC), forward error correction (FEC) and Reed Solomon error correction. These tests can be used to signal transport stream error indicator (TEI) for given data packets.

Fig. 6 illustrates how the first error frame 620a in the first transport stream 630 from satellite A can be replaced with a corresponding good frame from the second transport stream 610 from satellite B. The hatched cell in the first transport stream 630 shows that PCR/PTS 7A is missing in the sequence of frames, indicating damaged data. The video stream provider 640 then replaces the damaged frame in the first transport stream 630 with a frame from the second transport stream 610 which is labeled PTS/PCR_7B. In this way, an output transport stream 650 is constructed which is a combination of video frames from the first transport stream 630 and the second transport stream 610. Damaged data frames of one satellite downlink may individually be substituted with known good data packets making up a corresponding frame from the other satellite downlink without replacing the complete transport stream.

The principle of damaged frame replacement outlined above may be extended to the replacement of groups of damaged frames.

The process illustrated by Fig. 6 may be applied to all program channels within the MPEG transport stream. That is, as shown in Fig. 5, a plurality of video channels, i.e. video channel 1 to video channel n, may be present, and the process of Fig. 6 may be used to replace damaged frames across all of the n video channels.

The output transport stream 650 can be delivered to video decoding systems within the hardware / software platform for video frame decompression, or downstream to remote devices separate from the hardware / software platform.

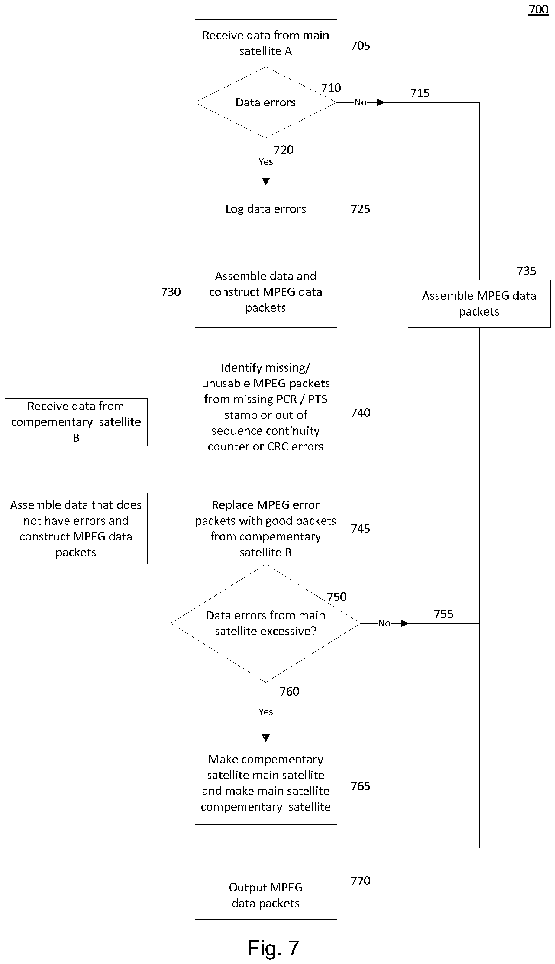

Fig. 7 is a flowchart illustrating a method of damaged data packet replacement according to an exemplary embodiment. In the damaged data packet replacement method 700, first video stream data is received from a main satellite 710. It is determined whether the data contains errors 720. If data errors are not present 720, No, the MPEG data packets are assembled 735. However, if data errors are present 720, Yes, the data errors are logged 725. Packets that do not have data errors are assembled and MPEG data packets are constructed 730. MPEG packets that are unusable are identified from the error indicators and gaps in packet sequences can be determined from missing PTS/PCR/CC information 740. The identified unusable or missing MPEG packets are replaced with good packets from in the complementary video stream from complementary satellite 745. It is then determined whether data errors in the main video stream from the main satellite are excessive 755. If it is determined that the data errors are not excessive 755, No, the MPEG data packets are output 770 as an output video stream. However, if it is determined that the data errors are excessive 755, Yes, the complementary satellite is changed with the main satellite. That is, assuming that Satellite A is the main satellite and Satellite B is the complementary satellite, if the data errors from Satellite A are determined to be excessive, Satellite A is made the complementary satellite, and Satellite B is made the main satellite. Then, the MPEG data packets are output 770 as an output video stream. Flowchart 700 via process 755 and 760 illustrates that a complementary satellite B may take over the role of a main satellite A when data errors from the main satellite reach an unacceptable level.

The embodiments described with reference to Figs 4 to 7 all rely on a common video encoder. In this way, the data packets in the transport streams in both delivery paths (via the main satellite and the complementary satellite) are completely correspondent to each other, or even identical. Hence, when a data error occurs, data can be replaced on a packet by packet basis.

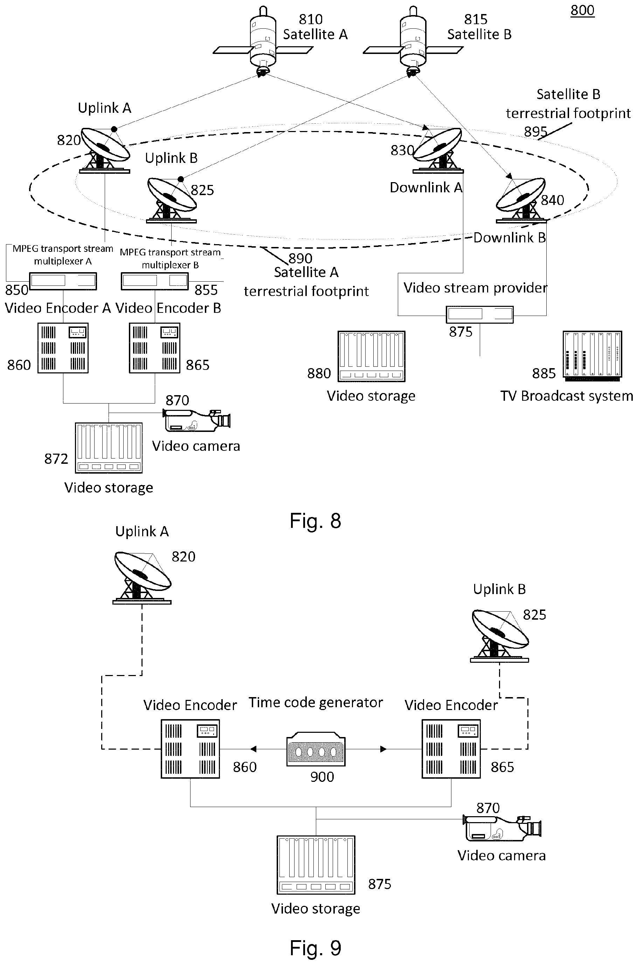

Fig. 8 illustrates an example configuration in which two satellite transmission paths may be employed by using a dedicated video encoder according to another exemplary embodiment. As shown in Fig. 8, a satellite TV broadcasting system 800 includes a Satellite A 810 and a Satellite B 815. The Satellite A 810 receives a transmitted signal from an Uplink A 820 and transmits the received signal to a Downlink A 830. Satellite A 810, Uplink A 820, and Downlink A 830 have a geographical area indicated as Satellite A terrestrial footprint 890. Similarly, Satellite B 815 receives a transmitted signal from an Uplink B 825 and transmits the received signal to a Downlink B 840. Satellite B 815, Uplink B 825, and Downlink B 840 have a geographical area indicated as Satellite B terrestrial footprint 895. The Satellite A terrestrial footprint 890 and the Satellite B terrestrial footprint 895 may partially or fully overlap.

The Uplink A 820 is communicatively coupled to a multiplexer A 850, which generates a transport stream, and the multiplexer A 860 is communicatively coupled to a video encoder A 860. The Uplink B 825 is communicatively coupled to a multiplexer B 855, which generates a transport stream, and the multiplexer B 855 is communicatively coupled to a video encoder B 865. The video encoder A 860 and the video encoder B 865 may both be communicatively coupled to a video storage 872 and/or a video camera 870. The Downlink A 830 and the Downlink B 840 are each communicatively coupled to a dual input video stream provider 875, and the dual input video stream provider 875 is communicatively coupled to a video storage 880 and a TV broadcast system 885. In this case, independent MPEG encoders 860, 865 and multiplexers 850, 855 feed the satellite uplinks 820, 825. The encoders and multiplexers need not be configured identically. Although the actual data output from video encoders 860 and 865 may be different, the picture content of each MPEG frame will match to a large degree.

Fig. 9 illustrates an uplink side of the satellite TV broadcast system of Fig. 8 in more detail. As shown in Fig. 9, a time code generator 900 is communicatively coupled to the video encoder A 860 and the video encoder B 865. The time code generator 900 provides time stamps to each video encoder output for satellite feeds A and B. That is, time stamps are output to the video encoder A 860 and the video encoder B 865, and the time stamps are inserted as ancillary data into the output data by the video encoder A 860 and the video encoder B 865. The time stamp from the time code generator 900 is supplied simultaneously to both the video encoder A 860 and the video encoder B 865 to enable synchronization in the video stream provider after downlink of the satellite feeds.

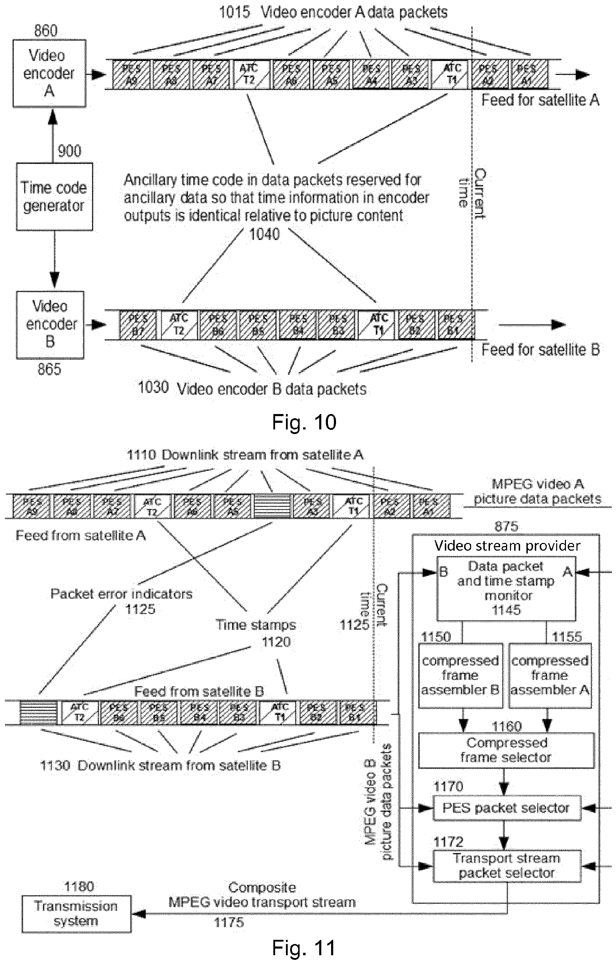

Fig. 10 illustrates applying time stamp information in the uplink side of Fig. 9. As shown in Fig. 10, the time code generator 900 provides time stamps to each of the video encoder A 860 and the video encoder B 865. The encoders 860, 865 time stamp ancillary data in each video frame using the time stamp from the time code generator 900. The video encoder A 860 generates data packets 1015, and the video encoder B 865 generates data packets 1030. The time stamp information is used to insert frame position information into the data packets 1015 and the data packets 1030 for a program channel so that the time stamp information of the compressed video frames is identical for each satellite uplink.

Ancillary data packets ATC T1 and ATC T2 inserted into the program streams which form the MPEG transport streams carry the time stamp information for each frame. Ancillary data is a data type separate from audio data and video data which can form part of a transport stream.

The compressed program channel video frame data for each satellite uplink need not match but the time stamp value of the frames in the respective satellite feeds must be similar. Alternatively, the time stamp values of the frames in the respective satellite feeds may be identical. In this exemplary embodiment, it is advantageous if program channels that implement redundancy protection are time stamped in this manner in order to provide a mechanism for synchronizing the program channels that have redundancy protection at the downlink end. Additionally, the bit rates of the program data packets 1015 and 1030 can be configured to be of about the same bit rate so that the overall average bit rate of satellite data feeds A and B are similar to keep the transmission bandwidth within a transmission bandwidth limit when switching between satellite feeds from Satellite A and Satellite B.

Fig. 11 illustrates a video stream provider of the satellite TV broadcast system of Fig. 8. As shown in Fig. 11, the video stream provider 875 includes a data packet and time stamp monitor 1145, a compressed frame assembler B 1150, a compressed frame assembler A 1155, and a compressed frame selector 1160. The data packet and time code monitor 1145 receives the downlink transport stream 1110 from Satellite A, and the downlink transport stream 1130 from Satellite B, and passes the downlink transport streams to the compressed frame assembler A 1155 and the compressed frame assembler B 1150, respectively. The output of the compressed frame assembler A 1155 is passed to the compressed frame selector 1160, and the output of the compressed frame assembler B 1150 is passed to the compressed frame selector 1160. The output of the compressed frame selector 1160 is passed to the PES packet selector 1170 and the output of the PES packet selector is passed to transport stream packet selector 1172.

The downlink transport stream 1110 from Satellite A corresponds to the picture data packets from video encoder A. The downlink stream 1130 from Satellite B corresponds to the picture data packets from video encoder B. As shown in Fig. 11, the downlink transport stream 1110 from Satellite A and the downlink transport stream 1130 from Satellite B will not have identical frame placement at a current time 1125. There may be different delays in the uplink paths so that when downlink occurs there is an offset between the two transport streams to the video stream provider 875. It is advantageous to provide sufficient buffer memory in the video stream provider 875 for data storage in order to align the video frames of each feed using the time stamps inserted before the satellite uplink.

Fig. 11 shows that frame time stamps ATC T1 and ATC T2 are present in each of the downlink transport stream 1110 from Satellite A and the downlink transport stream 1130 from Satellite B. The video stream provider 875 synchronizes the program channel video frames from the satellite downlink transport streams. The compressed frame assembler A 1155 and the compressed frame assembler B 1150 assemble the compressed video encoded in the data streams 1110 and 1130, respectively, from the received data packets.

The data packet and time code monitor 1145 uses packet error indicators 1125 and time stamps 1120 to establish the location where errors occur in the assembled compressed frames. By this method, damaged compressed frames can be identified. The compressed frame selector 1160 provides information to a PES packet selector 1170 and the transport stream packet selector so that packets can be selected from each of the satellite downlinks 1110, 1130 that can be later used to construct known good compressed frames. Therefore, a new output MPEG transport stream that includes the known good compressed frames can be fed into a transmission system 1180 without altering data within the data packets. That is, the compressed frame selector 1160 provides information to the PES packet selector 1170 which provides information to the transport stream selector 1172 that indicates from which downlink transport stream 1110, 1130 the individual packets should be selected by the transport stream packet selector 1172 to generate the new composite MPEG transport stream.

In the example shown in Fig. 11, the compressed frame selector 1160 would indicate that missing packet A4 of the A transport stream 1110, which results in a damaged frame, should be replaced with the packets from the B transport stream 1130, and then the PES packet selector 1170 would add the information in B packets in place of the packet A4 and other packets for the stream 1110 that comprise the damaged frame.

Conversely, where damage occurs in the B transport stream indicated by missing packet B7, known good packets from A transport stream could replace frame damage in the B transport stream caused by missing packet B7. Transport stream packets are constructed from PES packets. Therefore transport stream packets can be selected based on the PES packet replacement 1172. The output MPEG transport stream 1175 can be delivered to video decoding systems within the hardware / software platform for video frame decompression, or downstream to remote devices separate from the hardware / software platform.

It is to be noted that the reconstructed output MPEG transport stream 1175 is the main video stream, in this case the downlink transport stream 1110 from Satellite A with certain packets replaced by packets from the downlink transport stream 1130 from Satellite B. However, as described above, in a case where the number of errors in the downlink transport stream 1110 from Satellite A is greater or equal to a threshold number, the PES packet selector 1170 may switch the output MPEG transport stream 1175 to be based on the downlink transport stream 1130 from satellite B stream with packets replaced by packets from the downlink transport stream 1110 from satellite A.

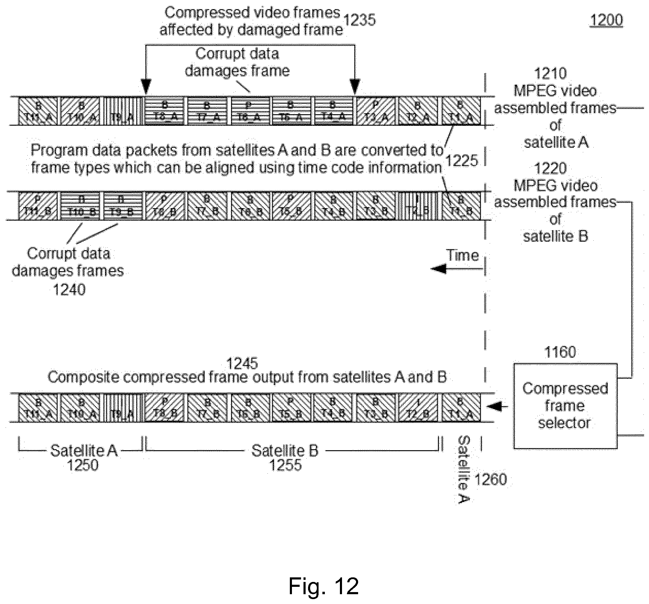

Fig. 12 illustrates a compressed frame selector 1160 of Fig. 11 and its operation in more detail. Fig. 12 provides further detail about how compressed frames may be selected. In this exemplary embodiment, the video for satellite A is encoded differently from the video for satellite B such that the sequence of compressed frame types is different although the picture content for each frame is similar or the same. Single data packet replacement cannot be performed in this situation, data replacement occurs on frame boundaries, often in groups of frames.

The video stream 1210 from Satellite A are labeled with time stamp sequence T1_A to Tx_A. Thus, in this example in which eleven frames as shown, the frames are labeled T1_A to T11_A. The video stream 1220 from Satellite B are labeled with time stamp sequence T1_B to Tx_B. Thus, in this example in which eleven frames as shown, the frames are labeled T1_B to T11_B.

Using a data packet error identification method (as described above), packets for from groups of frames are damaged. These groups of video frames are noted as being damaged due to encoding dependencies between frames. For instance, B frames contain difference information, and are generated from P and/or I frames during video encoding. Therefore a missing P frame can prevent reconstruction spanning several frames. For example, a group 1235 and a group 1240 are noted as being damaged. In the case of group 1235, a corrupt damaged frame T6_A results in four additional frames being unavailable to reconstruct the compressed video, in this case frames T4_A, T5-A, T6_A, T7_A and T8A. Thus, T4_A, T5_A, T6_A, T7_A and T8_A are labeled as the group 1235 of video frames affected by the damaged frame T6_A. Similarly, corrupt frames T9_B and T10_B leads to the group of T9_B and T10_B being labeled together as a group 1240 of compressed video frames affected by the damaged frames T9_B and T10_B.

The compressed frame selector 1160 constructs a new output video stream 1245 output by switching between the assembled frames 1210 of Satellite A and the assembled frames 1220 of Satellite B at chosen frame points. In MPEG video, there are three frame types: I frame, P frame and B frame. I frames and certain P frames with minimum dependency for frame reconstruction on other frames can be used for switch over points. As shown in Fig. 12, the frame selector 1160 has constructed the composite compressed frame output 1245 with known good frame section 1250 from Satellite A, known good frame section 1255 from Satellite B, and known good frame 1260 as indicated by the time stamp sequences.

The program channel reconstruction illustrated in FIGS. 11 and 12 may be applied to any multiplexed program channels of a MPEG transport stream that possess synchronization time stamps and contain the same video for satellite uplinks. The reconstruction process enables an MPEG transport stream with greatly reduced data errors to be built using data from multiple satellite downlinks such that gaps in transmission to the end user do not occur. The process does not require de-multiplexing and re-multiplexing of channels contained in the transport stream provided that the video encoders produce data outputs that have similar average bit rate so that when selecting frames from either satellite feed, the transmission bandwidth requirement is not exceeded.

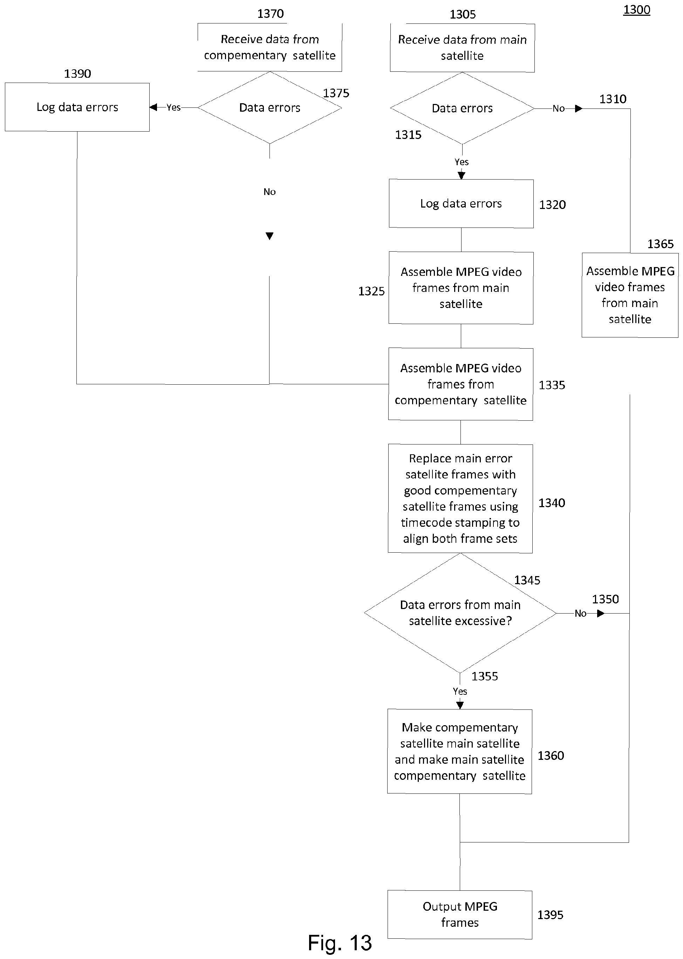

Fig. 13 is a flow chart illustrating a process of program channel reconstruction according to an exemplary embodiment, e.g. in accordance with Figs 11-12. The program channel reconstruction process 1300 starts when data of a main video stream is received from the main satellite 1305 and data of a complementary video stream is received from the complementary satellite 1370. It is then determined whether data errors are present in the complementary video stream 1375. If data errors are present 1380, the data errors are logged 1390 and the process proceeds to operation 1335. If data errors are not present 1385 the process proceeds to operation 1335.

In parallel, at the same or similar time as the determination whether data errors are present in the complementary satellite data, data of the main video stream is received from the main satellite 1305 and it is also determined whether data errors are present in the main video stream data 1315. If data errors are not present 1310, the MPEG video frames are assembled from the data received from the main satellite 1365, and the assembled MPEG frames are output 1395 as an output video stream. If data errors are present 1317, the data errors are logged 1320, and the MPEG video frames from the main satellite are assembled 1325 and the process passes to operation 1335.

In operation 1335, the MPEG video frames of the complementary video stream from the complementary satellite are assembled. The frames of the main video stream from the main satellite that have data errors are replaced with known good frames from the complementary video stream from the complementary satellite 1340. During the replacement, frames are replaced using time code stamping to align both frame sets. It is then determined whether the data errors from the main satellite are excessive 1345. To make the determination of whether the data errors are excessive, the number of data errors over a period of time may be counted and compared to a threshold. If the number of errors is equal to or greater than the threshold, the data errors are determined to be excessive; otherwise the data errors are not determined to be excessive. The threshold may be set experimentally, and may be predetermined. If it is determined that the data errors are not excessive 1350, the MPEG frames are output 1395 in which the data errors are replaced. If the data errors are determined to be excessive 1355, the roles of the main satellite and the complementary satellite are exchanged 1360. That is, the data stream from the complementary satellite is made main, and the data stream from the main satellite is made complementary in generating the output stream. Once the roles are reversed, the MPEG frames are output 1395. Thus, according to the program channel reconstruction process 1300, the main and complementary satellites may exchange roles when the main satellite has excessive data errors in its output.

The embodiments described with reference to Figs 8 to 13 utilize two separate video encoders, but the separate video encoders use the same coding scheme, e.g. MPEG-2, MPEG-4 or HEVC. It can not be assumed that the data packets in both delivery paths (via the main satellite and the complementary satellite) are completely correspondent to each other. However, it can be assumed that the video in groups of video frames find correspondence in the two delivery paths. Groups of video frames can e.g. be delimited by I-frames to allow the switching of video streams, since I-frames are not dependent on any other frames. In this way, while it may not be possible to replace single video frames on a packet by packet basis, groups of compressed video frames can be replaced at packet level without the need to decompress. This results in a system without the need to decode both video streams, but still allowing redundant encoders

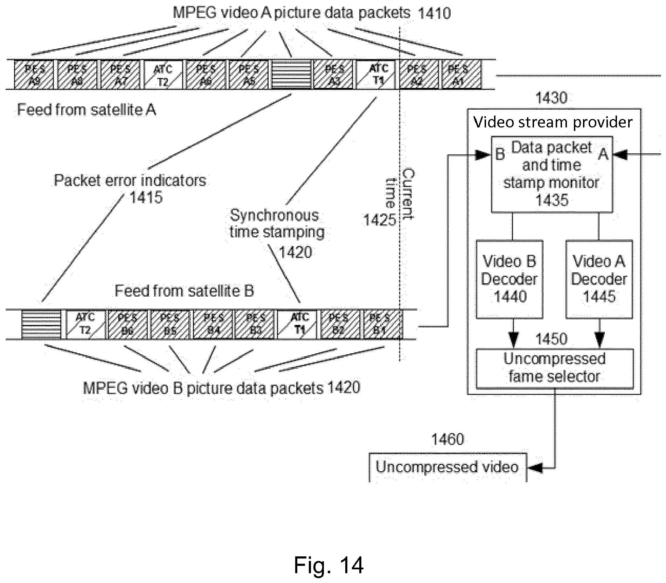

Fig. 14 illustrates a video stream provider and its operation according to another exemplary embodiment. As shown in Fig. 14, a video stream provider 1430 includes a data packet and time stamp monitor 1435, a video B decoder 1440, a video A decoder 1445, and uncompressed frame selector 1450. The video stream provider 1430 may be used in place of the dual input video stream provider 875 in Fig. 8.

In this exemplary embodiment, the encoders for satellite uplinks A and B can be configured independently with any choice of output bit rate. Each video program replicated in the satellite uplinks A and B is time stamped for redundancy protection. In the video stream provider 1430 the downlinked programs within the MPEG transport streams for satellites A and B are fully decompressed by video decoder A 1445 and video decoder B 1440, respectively, to uncompressed frames ready for presentation. Channels from satellite downlinks A and B that have the same video program and possess synchronous time stamping for redundancy protection can be analyzed for errors so that the redundancy protection can be implemented. Data packet and time stamp monitor 1435 uses packet error indicators 1415 established by data integrity tests previously described and time stamps 1420 to establish where errors are occurring in the assembled uncompressed frames. As compared to the above exemplary embodiment, in this exemplary embodiment, damaged or corrupted uncompressed frames can be identified. Uncompressed frame selector 1450 switches between the output of video decoder A 1445 and video decoder B 1140 to produce uncompressed video 1460 output which contains undamaged frames. The uncompressed frame selector 1450 chooses frames based on the damage that has been incurred by the transmission system

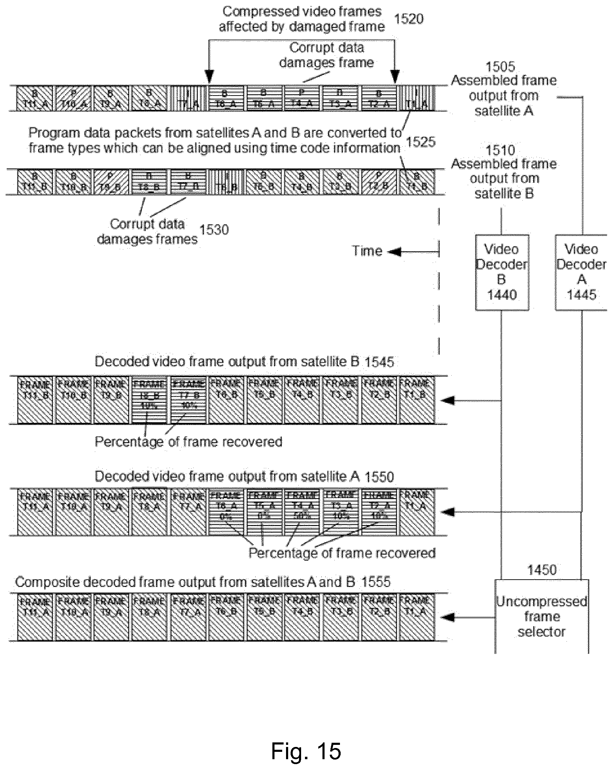

Fig. 15 illustrates video decoders of the video stream provider of Fig. 14 in more detail. As shown in Fig. 15, the video stream 1505 output from Satellite A and the video stream 1510 output from Satellite B are synchronized. The frames in the video stream 1505 from satellite A are labeled with time sequence T1_A to Tx_A. Thus, in this case in which eleven frames are shown, the frames of the video stream 1505 from satellite A are labeled with time sequence T1_A to T11_A. The frames of the video stream 1510 from satellite B are labeled with time stamp sequence T1_B to Tx_B. Thus, in this case in which eleven frames of the video stream 1510 from satellite B are shown, the assembled frames are labeled with time sequence Ti_B to T11_B.

The video decoder A 1445 decodes the compressed frames of the video stream 1505 from satellite A and produces uncompressed video frame output 1550 sequence. In the decoded video frame output 1550, uncompressed frames are labeled T2_A, T3A, T4A, T5_A, and T6_A are incomplete with the percentage values shown representing an amount of recoverable data for each frame. Similarly, the video decoder B 1440 decodes the compressed frames of the video stream 1510 from satellite B and produces uncompressed video frame output 1545 sequence, where frames labeled T7_B and T8_B are incomplete with the percentage values shown representing an amount of recoverable data for each frame.

The uncompressed frame selector 1450 uses knowledge of damaged frames, i.e. the percentages values representing the amount of recoverable data, to produce an output frame sequence 1555. For example, the composite frame sequence 1555 in Fig. 15 only uses complete frames from sequence 1545 and sequence 1550. The composite frame sequence 1555 shows that frame T1_A is supplied by satellite A. T2_B, T3_B, T4_B, T5_B and T6_B frames are supplied by satellite B and the following frames are supplied by satellite A. Alternatively, the output frame sequence 1555 may include frames in which the percentage of recoverable data is greater than or equal to a threshold percentage. Hence a sequence of known good and least damaged frames can be assembled from satellite feeds A and B for final presentation. It is to be noted that, in this embodiment, the output frame sequence 1555 is made up of uncompressed frames.

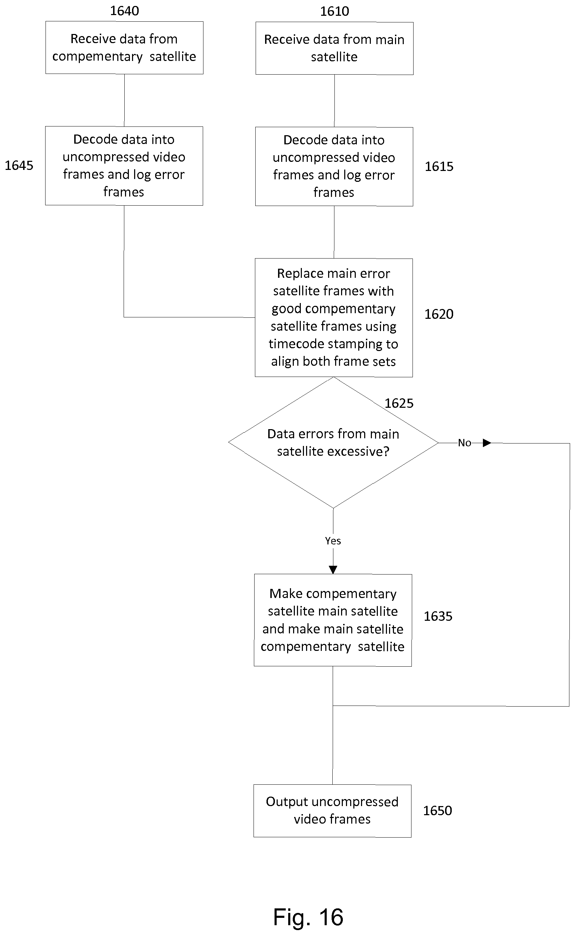

Fig. 16 is a flowchart illustrating an example process of video data reconstruction according to an exemplary embodiment corresponding to the embodiment of Figs 14 and 15. The process of video data reconstruction 1600 starts with receiving data from a main satellite 1610 and, in parallel, at the same or similar time, receiving data from a complementary satellite 1640. The data from the complementary satellite is decoded into uncompressed video frames and log errors frames 1645. Operation 1645 may include operations similar to operations 1390 and 1375 of Fig. 13, except that the data is decoded data and therefore uncompressed. The data from the main satellite is also decoded into uncompressed video frames and error frames are logged 1615. Operation 1615 may include operations similar to operations 1315 and 1320 of Fig. 13, except that the data is decoded data and therefore uncompressed.

The decoded data from operation 1645 and operation 1615 are then passed to operation 1620. In operation 1620, frames of the main satellite data that include data errors are replaced with known good frames from the complementary satellite data. The replacement may use time code stamping to align both sets of frames. It is then determined whether data errors from the main satellite data are excessive 1625. To make the determination of whether the data errors are excessive, the number of data errors over a predetermined period of time may be counted and compared to a threshold. If the number of errors is equal to or greater than the threshold, the data errors are determined to be excessive; otherwise the data errors are not determined to be excessive. The threshold may be set experimentally, and may be predetermined. If the data errors are not excessive 1630, the uncompressed video frames are output 1650. However, if the data errors are excessive 1630, the main satellite and the complementary satellite are swapped. In other words, the main satellite is made the complementary satellite and the complementary satellite is made the main satellite. The uncompressed video frames are then output 1650.

Thus, the process of Fig. 16 is similar to the process of Fig. 13, except the data is first decoded to produce uncompressed data and the frames of the uncompressed data are used. Accordingly, the description of the process of Fig. 13 also applies here and will not be repeated. Thus, according to the process 1600, during good reception conditions one satellite is selected as the main data feed 1610, and error frames in decoded output are replaced with known good frames from the video stream of the complementary satellite. When errors from the main satellite are determined to be excessive, the complementary satellite may reverse roles with the main satellite.

The embodiments described in Figs 14 to 16 utilize two separate video encoders, which each can use any suitable coding scheme, e.g. MPEG-2, MPEG-4 or HEVC. Hence, it can not be reliable assumed that the compressed video frames are completely correspondent to each other since they can be of different coding schemes. By first decoding the video frames and replacing uncompressed frames, the only requirement on the encoders is that the resulting compressed video can be decoded by the video stream provider. This results in a very flexible system not dependent on correspondance between encoders.

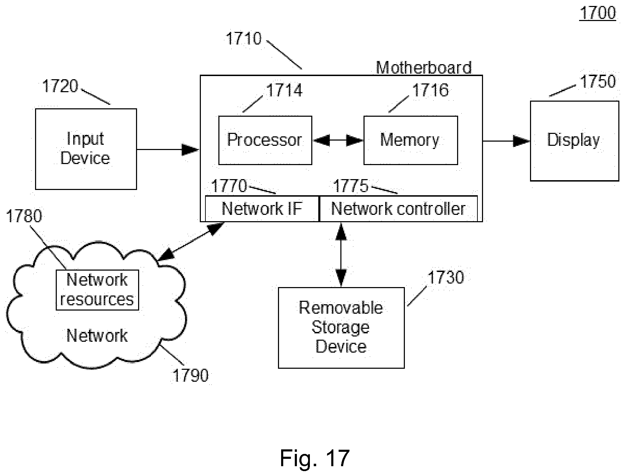

Fig. 17 is a block diagram of a video stream provider according to an exemplary embodiment. The processes described above may be implemented on a video stream provider of Fig. 17. For example, the video stream provider described above may be implemented using a video stream provider of Fig. 17. As shown in Fig. 17, a video stream provider 1700 includes a platform 1710 including a processor 1714 and memory 1716 which operate to execute instructions. For example, the processor 1714 may be a microcontroller or a microprocessor. Additionally, the platform 1710 may receive input from a plurality of input devices 1720, such as a keyboard, mouse, touch device or verbal command. The platform 1710 may additionally be connected to a removable storage device 1730, such as a portable hard drive, optical media (CD (compact disc) or DVD (digital versatile disc)), disk media or any other tangible medium from which executable computer program code for the processor 1714 can be read.

The platform 1710 further includes a network interface (I/F) 1770 for communicatively coupling to a network 1790. In this way, the video stream provider can communicate with external resources (e.g. video storage and/or TV broadcast systems) to receive and/or transmit video streams. This allows the video stream provider to process the video streams, in accordance with what is described above. The platform 1710 may be communicatively coupled to network resources 1780 which connect to the Internet or other components of a local network such as a LAN or WLAN. The local network may be a public or private network. The network resources 1780 may provide instructions and data to the platform 1710 from a remote location on a network 1790. The connections to the network resources 1780 may be accomplished via wireless protocols, such as the 802.11 standards, BLUETOOTH® or cellular protocols, or via physical transmission media, such as cables or fiber optics. The network resources 1780 may include storage devices for storing data and executable instructions at a location separate from the platform 1710. The platform 1710 interacts with a display 1750 to output a graphical user interface and/or video data including a video data stream and other information to a user, as well as to request additional instructions and input from the user. The display 1750 may also further act as an input device 1720 for interacting with a user, e.g. when the display 1750 includes a touch sensitive screen.

The term "computer-readable storage medium" as used herein refers to any tangible medium, such as a disk or semiconductor memory, that participates in providing instructions to processor 1714 for execution. For example, the computer-readable storage medium may be a removable disk readable by the removable storage device 1730, or the memory 1716, or a storage device located on a device on the network 1790, each of which being accessible by the processor 1714 of the video stream provider 1700.

The exemplary embodiments herein describe correction of a first corrupted video by using data packets from a second video stream such that correction occurs by data packet replacement without assembling video frames, or by assembling compressed video frames and replacing compressed video frames, or by decompressing video frames and replacing decompressed video frames.

The foregoing exemplary embodiments and advantages are merely exemplary and are not to be construed as limiting the inventive concept. The present inventive concept can be readily applied to other types of apparatuses. Also, the description of the exemplary embodiments is intended to be illustrative, and not to limit the scope of the claims, and many alternatives, modifications, and variations will be apparent to those skilled in the art. Although the inventive concept has been described with reference to certain exemplary embodiments, it will be understood that modifications and variations may be made thereto without departing from the scope defined by the appended claims.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A video stream provider (280, 365, 435, 640, 875, 1430, 1700) for providing an output video stream, the video stream provider comprising:
a processor (1714); and
a memory (1716) storing instructions that, when executed by the processor, causes the video stream provider to:
receive a first video stream (630, 1210, 1505) comprising a plurality of video frames from a first satellite (310, 410, 510, 810), the first video stream being a main video stream, encoded by a first video encoder;
receive a second video stream (610, 1220, 1510) comprising a plurality of video frames from a second satellite (305, 405, 505, 805), wherein the video frames of the second video stream correspond to the video frames of the first video stream, the second video stream being a complementary video stream, encoded by a second video encoder;
decode the main video stream and the complementary video stream;
when an uncorrupted video frame of the main video stream is determined, generate (735, 1365, 1615) an output video stream (650, 1245) based on the main video stream;
when a corrupted video frame of the main video stream is determined, replace the corrupted video frame with a corresponding video frame from the complementary video stream to generate the output video stream (650, 1245), wherein the corrupted video frame is in the decoded main video stream and the corresponding video frame is in the decoded complementary video stream;
output the output video stream; and
count a number of corrupted video frames of the main video stream; and
when the number of corrupted video frames is greater than a threshold number in a given time period, make the first video stream the complementary video stream and making the second video stream the main video stream.

2. The video stream provider according to claim 1, wherein the instructions to determine a corrupt video frame comprise instructions that, when executed by the processor, causes the video stream provider to determine that the corrupted video frame is missing a program reference clock stamp or a presentation time stamp, determining an out of sequence continuity counter, determining a cyclic redundancy check error, or obtaining a transport error indicator.

3. The video stream provider according to any one of the preceding claims, wherein the corrupted video frame is in the main video stream, and wherein both the main video stream and the complementary video stream comprise compressed video frames.

4. The video stream provider according to any one of the preceding claims, wherein the instructions to replace the corrupted video frame comprise instructions that, when executed by the processor, causes the video stream provider to replace uncompressed data of the corrupted video frame with uncompressed data of the corresponding video frame.

5. The video stream provider according to any one of the preceding claims, wherein the video frames of the main video stream and the video frames of the complementary video stream both include time stamp information; and
wherein the instructions to replace the corrupted video frame comprise instructions that, when executed by the processor, causes the video stream provider to replace based on the time stamp information.

6. The video stream provider according to claim 6, further comprising instructions that, when executed by the processor, causes the video stream provider to extract the time stamp information from ancillary data packets for the main video stream and the complementary video stream.

7. The video stream provider according to any one of the preceding claims, wherein the video stream provider is a satellite integrated receiver and decoder.

8. A method for providing an output video stream, the method being performed in a video stream provider and comprising the steps of:
receiving (705, 1305, 1610) a first video stream comprising a plurality of video frames from a first satellite, the first video stream being a main video stream, encoded by a first video encoder;
receiving (1370, 1640) a second video stream comprising a plurality of video frames from a second satellite, wherein the video frames of the second video stream correspond to the video frames of the first video stream, the second video stream being a complementary video stream, encoded by a second video encoder;
decoding the main video stream and the complementary video stream;
when an uncorrupted video frame of the main video stream is determined, generating an output video stream (650, 1245) based on the main video stream;
when a corrupted video frame of the main video stream is determined, replacing (745, 1340, 1620) the corrupted video frame with a corresponding video frame from the complementary video stream to generate the output video stream, wherein the corrupted video frame is in the decoded main video stream and the corresponding video frame is in the decoded complementary video stream;
outputting (770, 1395, 1650) the output video stream;
counting (750, 1345, 1625) a number of corrupted video frames of the main video stream; and
when the number of corrupted video frames is greater than a threshold number in a given time period, making (765, 1360, 1650) the first video stream the complementary video stream and making the second video stream the main video stream.

9. The method according to claim 8, wherein in the step of determining a corrupted video frame, the corrupted video frame is in the main video stream, and wherein both the main video stream and the complementary video stream comprise compressed video frames.

10. The method according to any one of claims 8 or 9, wherein the step of replacing the corrupted video frame comprises replacing uncompressed data of the corrupted video frame with uncompressed data of the corresponding video frame.

11. The method according to any one of claims 8 to 10, wherein the video frames of the main video stream and the video frames of the complementary video stream both include time stamp information; and
wherein the step of replacing the corrupted video frame comprises replacing based on the time stamp information.

12. A computer program for providing an output video stream, the computer program comprising computer program code which, when run on a video stream provider causes the video stream provider to:
receive a first video stream comprising a plurality of video frames from a first satellite, the first video stream being a main video stream, encoded by a first video encoder;
receive a second video stream comprising a plurality of video frames from a second satellite, wherein the video frames of the second video stream correspond to the video frames of the first video stream, the second video stream being a complementary video stream, encoded by a second video encoder;
decode the main video stream and the complementary video stream;
when an uncorrupted video frame of the main video stream is determined, generate an output video stream (650, 1245) based on the main video stream;
when a corrupted video frame of the main video stream is determined, replace the corrupted video frame with a corresponding video frame from the complementary video stream to generate the output video stream, wherein the corrupted video frame is in the decoded main video stream and the corresponding video frame is in the decoded complementary video stream;
output the output video stream; and
count a number of corrupted video frames of the main video stream; and
when the number of corrupted video frames is greater than a threshold number in a given time period, make the first video stream the complementary video stream and making the second video stream the main video stream.

13. A computer program product comprising a computer program according to claim 12 and a computer readable means on which the computer program is stored.

## Patentansprüche

1. Videostreamprovider (280, 365, 435, 640, 875, 1430, 1700) zum Bereitstellen eines Ausgabevideostreams, wobei der Videostreamprovider umfasst:
einen Prozessor (1714); und
einen Speicher (1716), der Anweisungen speichert, die bei Ausführen durch den Prozessor den Videostreamprovider veranlassen:
einen ersten Videostream (630, 1210, 1505) zu empfangen, der mehrere Videoframes von einem ersten Satelliten (310, 410, 510, 810) empfängt, wobei der erste Videostream ein Hauptvideostream ist, der durch einen ersten Videoencoder codiert ist;
einen zweiten Videostream (610, 1220, 1510) zu empfangen, der mehrere Videoframes von einem zweiten Satelliten (305, 405, 505, 805) umfasst, wobei die Videoframes des zweiten Videostreams den Videoframes des ersten Videostreams entsprechen und der zweite Videostream ein komplementärer Videostream ist, der durch einen zweiten Videoencoder codiert wird;
den Hauptvideostream und den komplementären Videostream zu decodieren;
wenn ein nicht korrupter Videoframe des Hauptvideostreams festgestellt wird, (735, 1365, 1615) einen Ausgabevideostreams (650, 1245) basierend auf dem Hauptvideostream zu erzeugen;
wenn ein korrupter Videoframe des Hauptvideostreams festgestellt wird, den korrupten Videoframe mit einem entsprechenden Videoframe aus dem komplementären Videostream zu ersetzen, um den Ausgabevideostream (650, 1245) zu erzeugen, wobei der korrupte Videoframe in dem decodierten Hauptvideostream liegt und der entsprechende Videoframe in dem decodierten komplementären Videostream liegt;
den Ausgabevideostream auszugeben; und
eine Anzahl korrupter Videoframes des Hauptvideostreams zu zählen; und
wenn die Anzahl korrupter Videoframes einen Grenzwert in einem bestimmten Zeitrahmen übersteigt, den ersten Videostream zu dem komplementären Videostream zu machen und den zweiten Videostream zu dem Hauptvideostream zu machen.

2. Videostreamprovider nach Anspruch 1, wobei die Anweisungen zum Feststellen eines korrupten Videoframes Anweisungen umfassen, die bei Ausführung durch den Prozessor den Videostreamprovider veranlassen, festzustellen, dass dem korrupten Videoframe ein Programmreferenztaktstempel oder ein Präsentationszeitstempel fehlt, einen Kontinuitätszähler außerhalb der Sequenz festzustellen, einen zyklischen Redundanzprüfungsfehler festzustellen oder eine Transportfehleranzeige festzustellen.

3. Videostreamprovider nach einem der vorhergehenden Ansprüche, wobei sich der korrupte Videoframe in dem Hauptvideostream befindet und wobei der Hauptvideostream und der komplementäre Videostream beide komprimierte Videoframes umfassen.

4. Videostreamprovider nach einem der vorhergehenden Ansprüche, wobei die Anweisungen zum Ersetzen des korrupten Videoframes Anweisungen umfassen, die bei Ausführung durch den Prozessor den Videostreamprovider veranlasst, unkomprimierte Daten des korrupten Videoframes durch unkomprimierte Daten des entsprechenden Videoframes zu ersetzen.

5. Videostreamprovider nach einem der vorhergehenden Ansprüche, wobei die Videoframes des Hauptvideostreams und die Videoframes des komplementären Videostreams beide Zeitstempelinformationen umfassen; und
wobei die Anweisungen zum Ersetzen des korrupten Videoframes Anweisungen umfassen, die bei Ausführung durch den Prozessor den Videostreamprovider veranlassen, auf Grundlage der Zeitstempelinformationen zu ersetzen.

6. Videostreamprovider nach Anspruch 6, ferner umfassend Anweisungen, die bei Ausführung durch den Prozessor den Videostreamprovider veranlassen, die Zeitstempelinformationen von Hilfsdatenpaketen für den Hauptvideostream und den komplementären Videostream zu extrahieren.

7. Videostreamprovider nach einem der vorhergehenden Ansprüche, wobei der Videostreamprovider ein satellitenintegrierter Empfänger und Decoder ist.

8. Verfahren zum Bereitstellen eines Ausgabevideostreams, wobei das Verfahren in einem Videostreamprovider durchgeführt wird und die folgenden Schritte umfasst:
Empfangen (705, 1305, 1610) eines ersten Videostreams, der mehrere Videoframes von einem ersten Satelliten umfasst, wobei der erste Videostream ein Hauptvideostream ist, der durch einen ersten Videoencoder codiert wird;
Empfangen (1370, 1640) eines zweiten Videostreams, der mehrere Videoframes von einem zweiten Satelliten umfasst,
wobei die Videoframes des zweiten Videostreams den Videoframes des ersten Videostreams entsprechen und der zweite Videostream ein komplementärer Videostream ist, der durch einen zweiten Videoencoder codiert wird;
Decodieren des Hauptvideostreams und des komplementären Videostreams;
wenn ein nicht korrupter Videoframe des Hauptvideostreams festgestellt wird, Erzeugen eines Ausgabevideostreams (650, 1245) basierend auf dem Hauptvideostream;
wenn ein korrupter Videoframe des Hauptvideostreams festgestellt wird, Ersetzen (745, 1340, 1620) des korrupten Videoframes mit einem entsprechenden Videoframe aus dem komplementären Videostream, um den Ausgabevideostream zu erzeugen, wobei der korrupte Videoframe in dem decodierten Hauptvideostream liegt und der entsprechende Videoframe in dem decodierten komplementären Videostream liegt;
Ausgeben (770, 1395, 1650) des Ausgabevideostreams;
Zählen (750, 1345, 1625) einer Anzahl korrupter Videoframes des Hauptvideostreams; und
wenn die Anzahl korrupter Videoframes einen Grenzwert in einem bestimmten Zeitrahmen übersteigt, Einstellen (765, 1360, 1650) des ersten Videostreams als den komplementären Videostream und Einstellen des zweiten Videostreams als den Hauptvideostream.

9. Verfahren nach Anspruch 8, wobei sich im Schritt des Feststellens eines korrupten Videoframes der korrupte Videoframe in dem Hauptvideostream befindet und wobei der Hauptvideostream und der komplementäre Videostream beide komprimierte Videoframes umfassen.

10. Verfahren nach einem der Ansprüche 8 oder 9, wobei der Schritt des Ersetzens des korrupten Videoframes umfasst, unkomprimierte Daten des korrupten Videoframes durch unkomprimierte Daten des entsprechenden Videoframes zu ersetzen.

11. Verfahren nach einem der Ansprüche 8 bis 10, wobei die Videoframes des Hauptvideostreams und die Videoframes des komplementären Videostreams beide Zeitstempelinformationen umfassen; und
wobei der Schritt des Ersetzens des korrupten Videoframes das Ersetzen basierend auf der Zeitstempelinformation umfasst.

12. Computerprogramm zum Bereitstellen eines Ausgabevideostreams, wobei des Computerprogramm Computerprogrammcode umfasst, der bei Ausführen auf einem Videostreamprovider den Videostreamprovider veranlasst zum:
Empfangen eines ersten Videostreams, der mehrere Videoframes von einem ersten Satelliten umfasst, wobei der erste Videostream ein Hauptvideostream ist, der durch einen ersten Videoencoder codiert wird;
Empfangen eines zweiten Videostreams, der mehrere Videoframes von einem zweiten Satelliten umfasst, wobei die Videoframes des zweiten Videostreams den Videoframes des ersten Videostreams entsprechen und der zweite Videostream ein komplementärer Videostream ist, der durch einen zweiten Videoencoder codiert wird;
Decodieren des Hauptvideostreams und des komplementären Videostreams;
wenn ein nicht korrupter Videoframe des Hauptvideostreams festgestellt wird, Erzeugen eines Ausgabevideostreams (650, 1245) basierend auf dem Hauptvideostream;
wenn ein korrupter Videoframe des Hauptvideostreams festgestellt wird, Ersetzen des korrupten Videoframes mit einem entsprechenden Videoframe aus dem komplementären Videostream, um den Ausgabevideostream zu erzeugen, wobei der korrupte Videoframe in dem decodierten Hauptvideostream liegt und der entsprechende Videoframe in dem decodierten komplementären Videostream liegt;
Ausgeben des Ausgabevideostreams; und
Zählen einer Anzahl korrupter Videoframes des Hauptvideostreams; und
wenn die Anzahl korrupter Videoframes einen Grenzwert in einem bestimmten Zeitrahmen übersteigt, Einstellen des ersten Videostreams als komplementären Videostream und Einstellen des zweiten Videostreams als Hauptvideostream.

13. Computerprogrammprodukt, umfassend ein Computerprogramm nach Anspruch 12 und ein computerlesbares Mittel, auf dem das Computerprogramm gespeichert ist.

## Revendications

1. Fournisseur de flux vidéo (280, 365, 435, 640, 875, 1430, 1700) pour la fourniture d'un flux vidéo sortant, le fournisseur de flux vidéo comprenant :
un processeur (1714) ; et
une mémoire (1716) sauvegardant des informations qui, une fois exécutées par le processeur, amènent le fournisseur de flux vidéo à :
recevoir un premier flux vidéo (630, 1210, 1505) comprenant une pluralité de cadres vidéo provenant d'un premier satellite (310, 410, 510, 810), le premier flux vidéo étant un flux vidéo principal codé par le premier codeur vidéo ;
recevoir un second flux vidéo (610, 1220, 1510) comprenant une pluralité de cadres vidéo provenant d'un second satellite (305, 405, 505, 805), les cadres vidéo du second flux vidéo correspondant aux cadres vidéo du premier flux vidéo, le second flux vidéo étant un flux vidéo complémentaire codé par un second codeur vidéo ;
décoder le flux vidéo principal et le flux vidéo complémentaire ;
lorsqu'un cadre vidéo non corrompu du flux vidéo principal est déterminé, générer (735, 1365, 1615) un flux vidéo sortant (650, 1245) en se basant sur le flux vidéo principal ;
lorsqu'un flux vidéo corrompu du flux vidéo principal est déterminé, remplacer le cadre vidéo corrompu par un cadre vidéo correspondant du flux vidéo complémentaire pour générer le flux vidéo sortant (650, 1245), le flux vidéo corrompu étant dans le flux vidéo principal décodé et le cadre vidéo correspondant étant dans le flux vidéo complémentaire décodé ;
émettre le flux vidéo sortant ; et
compter un nombre de flux vidéo corrompus du flux vidéo principal ; et
lorsque le nombre de flux vidéo corrompus est supérieur à un nombre seuil dans une période donnée, amener le premier flux vidéo à diffuser le flux vidéo complémentaire et le second flux vidéo à diffuser le flux vidéo principal.

2. Fournisseur de flux vidéo selon la revendication 1, dans lequel les instructions de détermination d'un flux vidéo corrompu comprennent des instructions qui, une fois exécutées par le processeur, amènent le fournisseur de flux vidéo à déterminer que le cadre vidéo corrompu est dépourvu d'un horodatage de référence de programme ou d'un horodatage de présentation d'une détermination d'un compteur de continuité hors séquence, d'une détermination d'une erreur de contrôle de redondance cyclique, ou d'une obtention d'un indicateur d'erreur de transport.

3. Fournisseur de flux vidéo selon l'une quelconque des revendications précédentes, dans lequel le cadre vidéo corrompu est le flux vidéo principal, et le flux vidéo principal et le flux vidéo complémentaire comprennent tous deux des cadres vidéo compressés.

4. Fournisseur de flux vidéo selon l'une quelconque des revendications précédentes, dans lequel les instructions de remplacement du cadre vidéo corrompu comprennent des instructions qui, une fois exécutées par le processeur, amènent le fournisseur de flux vidéo à remplacer les données non compressées du flux vidéo corrompu par des données non compressées du cadre vidéo correspondant.

5. Fournisseur de flux vidéo selon l'une quelconque des revendications précédentes, dans lequel les cadres vidéo du flux vidéo principal et les cadres vidéo du flux vidéo complémentaire incluent tous deux des informations d'horodatage ; et
les instructions de remplacement du cadre vidéo corrompu comprennent des instructions qui, une fois exécutée par le processeur, amènent le fournisseur de flux vidéo à procéder au remplacement en se basant sur les informations d'horodatage.

6. Fournisseur de flux vidéo selon la revendication 6, comprenant en outre des instructions qui, une fois exécutées par le processeur, amènent le fournisseur de flux vidéo à extraire les informations d'horodatage de paquets de données ancillaires pour le flux vidéo principal et le flux vidéo complémentaire.

7. Fournisseur de flux vidéo selon l'une quelconque des revendications précédentes, dans lequel le fournisseur de flux vidéo est un récepteur et décodeur intégré à un satellite.

8. Procédé de fourniture d'un flux vidéo sortant, ce procédé étant réalisé dans un fournisseur de flux vidés et comprenant les étapes suivantes :
réception (705, 1305, 1610) d'un premier flux vidéo comprenant une pluralité de cadres vidéo provenant d'un premier satellite, le premier flux vidéo étant un flux vidéo principal codé par un premier codeur vidéo ;
réception (1370, 1640) d'un second flux vidéo comprenant une pluralité de cadres vidéo provenant d'un second satellite, les cadres vidéo du second flux vidéo correspondant aux cadres vidéo du premier flux vidéo, le second flux vidéo étant un flux vidéo complémentaire codé par un second codeur vidéo ;
décodage du flux vidéo principal et du flux vidéo complémentaire ;
lorsqu'un cadre vidéo non corrompu du flux vidéo principal est déterminé, génération d'un flux vidéo sortant (650, 1245) en se basant sur le flux vidéo principal ;
lorsqu'un flux vidéo corrompu du flux vidéo principal est déterminé, remplacement (745, 1340, 1620) du cadre vidéo corrompu par un cadre vidéo correspondant du flux vidéo complémentaire pour générer le flux vidéo sortant, le flux vidéo corrompu étant dans le flux vidéo principal décodé et le cadre vidéo correspondant étant dans le flux vidéo complémentaire décodé ;
émission (770, 1395, 1650) du flux vidéo sortant ; et
comptage (750, 1345, 1625) d'un nombre de flux vidéo corrompus du flux vidéo principal ; et
lorsque le nombre de flux vidéo corrompus est supérieur à un nombre seuil dans une période donnée, amener (765, 1360, 1650) le premier flux vidéo à diffuser le flux vidéo complémentaire et amener le second flux vidéo à diffuser le flux vidéo principal.

9. Procédé selon la revendication 8, dans lequel, dans l'étape de détermination d'un cadre vidéo corrompu, le cadre vidéo corrompu est dans le cadre vidéo principal, et le cadre vidéo principal et le cadre vidéo complémentaire comprennent tous deux des cadres vidéo compressés.

10. Procédé selon l'une quelconque des revendications 8 ou 9, dans lequel l'étape de remplacement du cadre vidéo corrompu comprend le remplacement des données non compressées du cadre vidéo corrompu par des données non compressées du cadre vidéo correspondant.

11. Procédé selon l'une quelconque des revendications 8 ou 10, dans lequel les cadres vidéo du flux vidéo principal et les cadres vidéo du flux vidéo complémentaire incluent tous deux des informations d'horodatage ; et
l'étape de remplacement du cadre vidéo corrompu comprend le remplacement en se basant sur les informations d'horodatage.

12. Programme informatique pour la fourniture d'un flux vidéo sortant, ce programme informatique comprenant un code de programmation informatique qui, une fois exécuté sur un fournisseur de flux vidéo, amène le fournisseur de flux vidéo à :
recevoir un premier flux vidéo comprenant une pluralité de cadres vidéo en provenance d'un premier satellite, le premier flux vidéo étant un flux vidéo principal codé par un premier codeur vidéo ;
recevoir un second flux vidéo comprenant une pluralité de cadres vidéo en provenance d'un second satellite, les cadres vidéo du second flux vidéo correspondant aux cadres vidéo du premier flux vidéo, le second flux vidéo étant un flux vidéo complémentaire codé par le second codeur vidéo ;
décoder le flux vidéo principal et le flux vidéo complémentaire ;
lorsqu'un cadre vidéo non corrompu du flux vidéo principal est déterminé, générer un flux vidéo sortant (650, 1245) en se basant sur le flux vidéo principal ;
lorsqu'un cadre vidéo corrompu du flux vidéo principal est déterminé, remplacer le cadre vidéo corrompu par un cadre vidéo correspondant du flux vidéo complémentaire pour générer le flux vidéo sortant, le cadre vidéo corrompu étant dans le flux vidéo principal décodé et le cadre vidéo correspondant étant dans le flux vidéo complémentaire décodé ;
émettre le flux vidéo sortant ; et
compter un nombre de cadres vidéo corrompus du flux vidéo principal ; et
lorsque le nombre de cadres vidéo corrompus est supérieur à un nombre seuil dans une période donnée, amener le premier flux vidéo à diffuser le flux vidéo complémentaire et le second flux vidéo à diffuser le flux vidéo principal.

13. Produit de programmation informatique comprenant un programme informatique selon la revendication 12 et un moyen lisible par ordinateur sur lequel le programme informatique est sauvegardé.
